Europäisches Patentamt

(19) European Patent Office

Office européen des brevets

(11) Publication number : **0 486 468 B1**

(12) **EUROPEAN PATENT SPECIFICATION**

(45) Date of publication of patent specification :
19.04.95 Bulletin 95/16

(51) Int. Cl.⁶ : **H04N 5/265, H04N 5/272**

(21) Application number : **92100535.1**

(22) Date of filing : **05.03.87**

(54) Processing circuit for video signals.

(30) Priority : **06.03.86 US 836945**

(43) Date of publication of application :
**20.05.92 Bulletin 92/21**

(60) Publication number of the earlier application in
accordance with Art. 76 EPC : **0 236 943**

(45) Publication of the grant of the patent :
**19.04.95 Bulletin 95/16**

(84) Designated Contracting States :
**DE FR GB**

(56) References cited :
**EP-A- 0 160 549
WO-A-86/06234
GB-A- 2 155 729
COMPUTER GRAPHICS vol. 18, no. 3, July
1984, pages 253-259; T. PORTER et al.:
"Compositing Digital Images"**

(73) Proprietor : **The Grass Valley Group, Inc.
P.O.Box 1114
13024 Bitney Springs Road
Grass Valley California 95945 (US)**

(72) Inventor : **Jackson, Richard A.
10959 Genasci Road
Nevada City, California 95959 (US)**
Inventor : **Windrem, Kevin D.
157 Alta Sierra Drive
Grass Valley, California 95949 (US)**

(74) Representative : **Molyneaux, Martyn William et
al
c/o Ladas & Parry,
Altheimer Eck 2
D-80331 München (DE)**

## Description

This invention relates to a processing circuit for video signals.

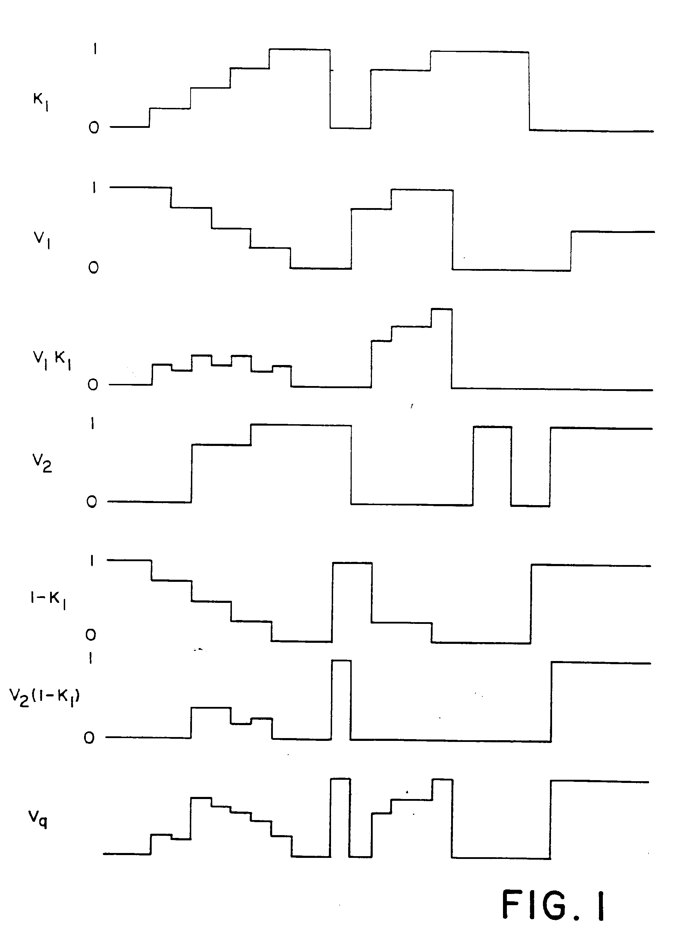

In a video mixer, two video signals $V_1$ and $V_2$ (FIG. 1) are multiplied by a key signal $K_1$ (having a range of values from 0 to 1) and its complement $(1 - K_1)$ respectively, and the two signals $V_1K_1$ and $V_2(1 - K_1)$ are additively combined in a summer to produce a composite output signal $V_q$ having the form $V_1K_1 + V_2(1 - K_1)$. When the key signal $K_1$ is zero, the input signal $V_1$ makes no contribution to the signal $V_q$, regardless of the value of $V_1$. Similarly, if $K_1$ is one, the signal $V_2$ makes no contribution to the signal $V_q$. The proportion of the signal $V_q$ that is contributed by $V_1$ determines the opacity with which the scene represented by the signal $V_1$ is perceived in the composite picture. If $K_1$ is one, i.e., $V_1$ represents 100% of the signal $V_q$, then the $V_1$ scene (the scene represented by the signal $V_1$) completely obscures the $V_2$ scene, regardless of the value of $V_2$. As $K_1$ decreases, the extent to which the $V_2$ scene is obscured in the composite picture is reduced until, when $K_1$ reaches zero, the $V_2$ scene is opaque and completely obscures the $V_1$ scene. Thus, the coefficients $K_1$ and $(1 - K_1)$ determine the relative opacity of the two component scenes: if the coefficient $K_1$ is greater than $(1 - K_1)$, then the $V_1$ scene at least partially obscures the $V_2$ scene and appears, to a viewer of the composite scene, to be in front of the $V_2$ scene.

The multiplication of the signals $V_1$ and $V_2$ by the key signal $K_1$ and its complement $(1 - K_1)$ is shown in FIG. 1, in which it is assumed that all signals have five discrete values in the range from zero to unity and have sharp transitions between levels. It will, of course, be appreciated that FIG. 1 is in fact very much simplified, and that in the case of analog signals the range of possible values is continuous, and that transitions for either analog or digital signals would have a finite slew rate.

A video signal $V_1'$ is said to be a "shaped" video signal when it is the multiplication product of an unshaped video signal $V_1$ and an associated key signal $K_1$. In general, there is no necessary relationship between the video signal and its associated key signal. A production switcher normally receives unshaped video signals and their associated key signals and provides a full screen video signal at its output. No key output is produced.

Shaping has two aspects, namely spatial or X - Y shaping (only the X-dimension is shown in FIG. 1), which determines the area of the composite picture to which the component signal makes a contribution (when $K_1 = 0$, the signal $V_1$ makes no contribution to the signal $V_q$), and opacity or Z shaping, which determines, for $K_1$ greater than zero, the magnitude of the contribution that is made by the component signal to the composite signal $V_q$. The shaping of the component signals is discussed in terms of "coverage" in Porter, T. and Duff, T., "Compositing Digital Images", Computer Graphics, Vol. 18, No. 3 (1984), pages 253 to 259.

The foregoing discussion of the manner of production of the signal $V_q$ is based on the assumption that the signal $V_2$ is a full field signal, i. e. that the key signal $K_2$ associated with the video signal $V_2$ is one for all locations. In the general case, $K_2$ is not one for all locations and

$$V_q = V_1K_1 + V_2K_2(1 - K_1)$$

It will be seen from this more general expression that the video signal $V_q$, being the weighted sum of two shaped video signals $V_1K_1$ and $V_2K_2$, is itself a shaped video signal. For the sake of consistency in notation, the shaped signal that has previously been designated $V_q$ will hereafter be designated $V_q'$, and $V_q$ will hereafter be used to designate the corresponding unshaped signal.

The key signal $K_q$ that relates $V_q'$ to $V_q$ is given by

$$K_q = 1 - (1 - K_1)(1 - K_2)$$

If, for every location, either $K_1$ or $K_2$ is one, then $K_q = 1$ for all locations. In particular, if either $V_1$ or $V_2$ is a full field signal, the signal $V_q'$ is a full field signal. If, on the other hand, $V_q'$ is not a full field signal it might be desired to form a composite scene from the scenes represented by the signal $V_q'$ and, e.g., a background scene represented by a signal $V_r$ having an associated key signal $K_r$. In such a case, the signal $(1 - K_q)$ would be used to process the signal $V_r$ in a production switcher, and an output signal $V_s' = V_q' + V_rK_r(1 - K_q)$ would be produced. Generally, $V_r$ would be a full field signal and so $K_r = 1$ and $V_s' = V_q' + V_r(1 - K_q)$.

Recalling that $V_q' = V_1K_1 + V_2K_2(1 - K_1)$, if $K_1 = 1$, then $V_q' = V_1$, i.e. the signal $V_2$ makes no contribution to the signal $V_q'$, regardless of the value of $K_2$. Therefore, combining of the video signals $V_1$ and $V_2$ is under the primary control of the key signal $K_1$. Similarly, if the signal $V_q'$ were equal to $V_1K_1(1 - K_2) + V_2K_2$, the combining would be under the primary control of the signal $K_2$, and if $K_2 = 1$, then $V_q' = V_2$ and $V_1$ makes no contribution regardless of the value of $K_1$. The two different situations are equivalent respectively to the $V_1$ scene and the $V_2$ scene being in the foreground of the composite scene. However, the conventional mixer does not allow the operator to control on a dynamic basis whether the mixing operation is under the primary control of the signal $K_1$ or of the signal $K_2$ and an apparatus for combining video signals providing such control is the subject of co-pending EP-A-0236943.

In passing, reference is made to GB-A-2155729 which discloses a video combiner in which unshaped video inputs are respectively applied to multipliers where the unshaped video signals are shaped by a key signal, and the outputs of the multipliers are further processed.

According to this invention there is provided a processing circuit for receiving a shaped video signal $V_3'$ and an associated key signal $K_3$ and providing output signals in response thereto, said processing circuit having at least a first mode of operation and comprising first means operative in the first mode of the processing circuit to generate from the shaped video signal $V_3''$ and the associated key signal $K_3$ an output video signal $V_3''$ given by

$$V_3'' = V_3' + A$$

where A is a function of the associated key signal and is independent of $V_3'$, and second means operative in the first mode to generate an output key signal having a constant value.

For a better understanding of the invention, and to show how the same may be carried into effect, reference will now be made, by way of example, to the accompanying drawings in which:

FIG. 1 shows waveforms to illustrate combining of video signals,

FIG. 2 is a block diagram of a combiner cell for combining first and second component video signals,

FIG. 3 is a block diagram of a combiner system comprising several combiner cells connected in a cascade arrangement, and

FIG. 4 is a block diagram of an output processing circuit for a combiner cell in accordance with the invention.

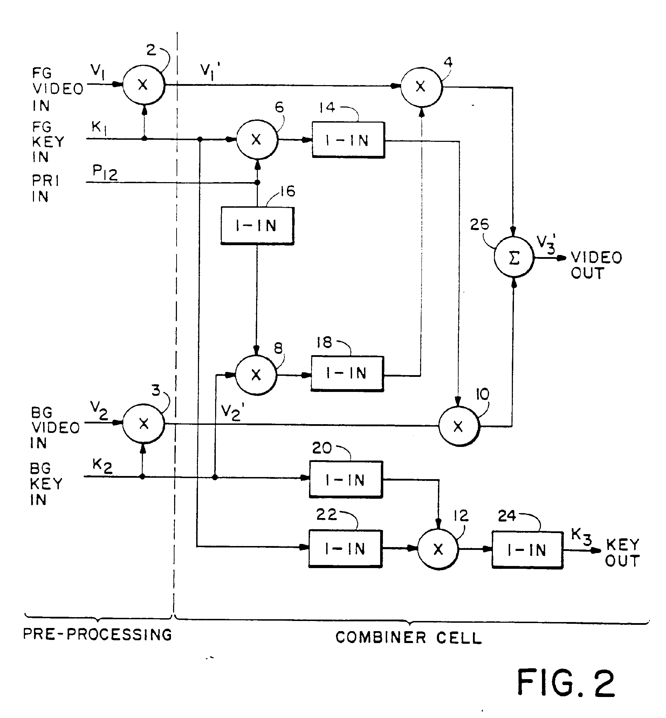

The combiner cell shown in FIG. 2 comprises multipliers 4, 6, 8, 10 and 12, complement circuits 14, 16, 18, 20, 22 and 24, and a summer 26. The illustrated combiner cell operates in the digital domain with parallel data, and therefore all the signal lines that are illustrated would in fact be multiple conductor lines. Additional circuitry would be required to assure proper timing relationships among the various signals, but such matters are well within the skill of the art and therefore are not shown and will not be further described.

The input signals of the combiner cell comprise two shaped video signals $V_1'$ and $V_2'$, associated key signals $K_1$ and $K_2$, and a priority signal $P_{12}$. The levels of the key signals $K_1$ and $K_2$ and the level of the priority signal $P_{12}$ are normalized to have maximum and minimum values that can be represented numerically as 1 and 0. Also, the video signals $V_1'$ and $V_2'$ have the same maximum and minimum values. Additional multipliers 2 and 3 are provided upstream of the combiner for generating the shaped video signals $V_1'$ and $V_2'$ from unshaped video signals $V_1$ and $V_2$ and the associated key signals $K_1$ and $K_2$. The combiner cell provides a shaped output video signal $V_3'$ and an output key signal $K_3$. It can readily be seen that the output video signal is given by the equation

$$V_3' = V_1'[1 - K_2(1 - P_{12})] + V_2'(1 - K_1 P_{12})$$

and that the output key signal is given by

$$K_3 = 1 - (1 - K_1)(1 - K_2).$$

The value of $P_{12}$ determines the weighting factors that are applied to the two video signals $V_1'$ and $V_2'$. If $P_{12}$ is equal to zero, this implies that the $V_2$ scene is in the foreground of the composite scene and that the $V_1$ scene is in the background, and vice versa if $P_{12}$ is equal to one.

For $P_{12}=0$, then

$$V_3' = V_1'(1 - K_2) + V_2'$$

The value of $K_2$ defines areas in which the $V_2$ scene contributes to the composite scene. If $K_2=1$, the contribution of $V_1$ to the composite scene is zero and therefore the $V_2$ scene completely obscures the $V_1$ scene. If $K_2=0$, $V_2'=0$ and therefore there is no contribution from $V_2$ and $V_1$ is allowed to pass to $V_3'$ unaltered

For $P_{12}=1$, then

$$V_3' = V_2'(1 - K_1) + V_1'$$

The value of $K_1$ defines areas in which the $V_1$ scene contributes to the composite scene. If $K_1=1$, the contribution of $V_2$ to the composite scene is zero and therefore the $V_1$ scene completely obscures the $V_2$ scene. If $K_1=0$, there is no contribution from $V_1$ and $V_2$ is allowed to pass to $V_3'$ unaltered.

For $P_{12}=0.5$, then

$$V_3' = V_1'(1 - K_2/2) + V_2'(1 - K_1/2)$$

Where $K_2=0$, $V_1'$ is passed unaltered; where $K_1=0$, $V_2'$ is passed unaltered; and where $K_2 > 0$ and $K_1 > 0$, the relative opacities of the $V_1$ and $V_2$ scenes are determined by the ratio of $K_1$ and $K_2$.

As $P_{12}$ increases from zero the relative depths of the $V_1$ and $V_2$ pixels in the composite image change, from the $V_2$ pixel appearing in front of the $V_1$ pixel, through the two pixels appearing to be at the same depth (at $P_{12}=0.5$), to the $V_1$ pixel appearing in front of the $V_2$ pixel. It will therefore be seen that the priority signal $P_{12}$ makes it possible to determine which of the component scenes will appear as the foreground scene in the composite picture. By changing the value of $P_{12}$, the composite picture can be changed so that a component scene is the foreground scene at one time and is the background scene at another time.

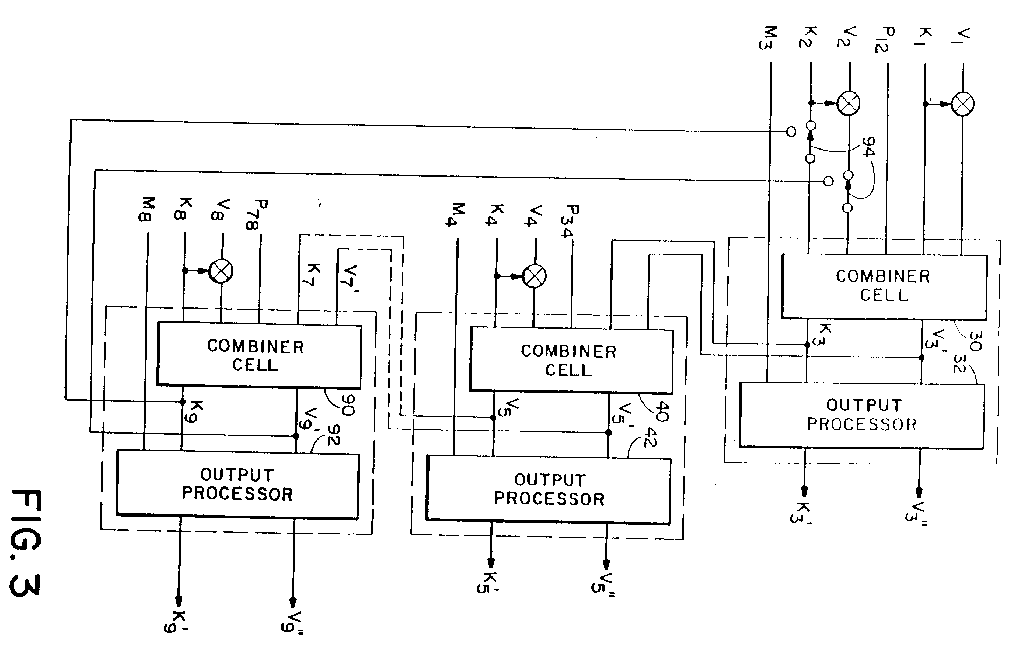

Several combiner cells 30, 40 . . . 90 of the kind shown in FIG. 2 may be connected in cascade, as shown in FIG. 3, to form a combiner system. Output processors 32, 42 . . . 92 are associated with the combiner cells respectively, for a reason which will be explained below. The output signals from the output processors are connected to a production switcher.

Conventional production switchers are designed to receive unshaped video signals and their associated key signals, and multiply the video signals by their key signals to produce shaped video signals that are combined with other shaped video signals, e.g., a signal generated by a digital video effects unit, to produce a final program video signal representing the desired composite picture. The output video signals provided by the combiner cells are already shaped by their respective key signals. If the signal $V_3'$, for example, is applied to a conventional production switcher it will be shaped a second time, and the result will be a black halo in the scene represented by the signal $V_3'$ for values of $K_3$ greater than zero and less than unity. The output processors are interposed between the combiner cells and the production switcher in order to generate unshaped video signals from the shaped video signals generated by the combiner cells.

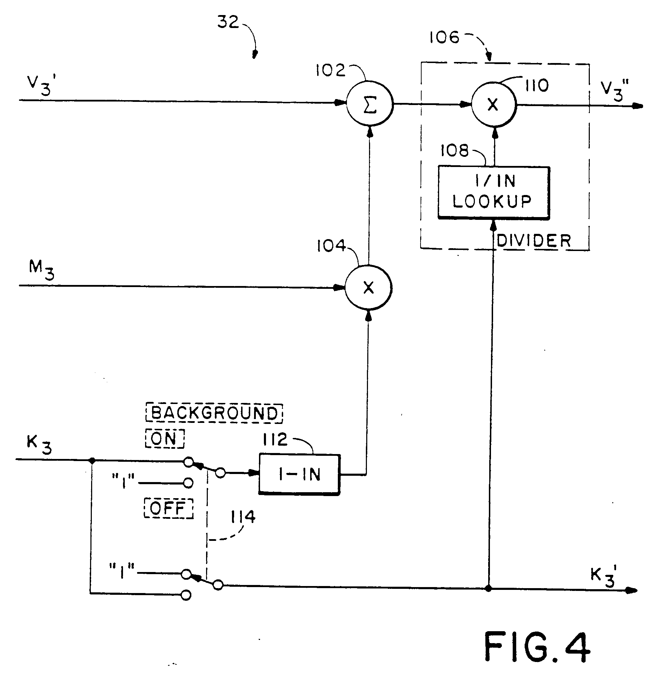

FIG. 4 shows a processing circuit associated with the combiner cell 30. The other output processing circuits are identical. As shown in FIG. 4, the output processing circuit 32 receives the shaped video signal $V_3'$ and the key signal $K_3$ from the associated combiner cell 30, and also receives a video matte signal $M_3$. The signal $M_3$ represents a background for the $V_3$ scene. The background may be, for example, a plain, solid color. The output processor comprises a summer 102, a multiplier 104, a divider 106 (implemented as a reciprocal look-up table 108 and a multiplier 110) and a complement circuit 112. In addition, the processor comprises a switch 114 for selecting one of two operating modes for the processor. The processor provides a composite output video signal $V_3''$ and a composite output key signal $K_3'$, which are applied as input signals to the production switcher.

In the first mode of operation of the processor (background on), the signal $V_3''$ is given by
$$V_3'' = V_3' + M_3(1 - K_3).$$
Thus, for any pixel for which $K_3$ is zero, $V_3' = 0$ and $V_3'' = M_3$. If $K_3$ is not zero, indicating that $V_3'$ is non-zero, the relative contribution of $V_3'$ to $V_3''$ depends on the value of $K_3$, and it can be seen that for $K_3 = 1$, $M_3$ is not permitted to make a contribution and $V_3'' = V_3'$. The output key signal $K_3'$ is set to unity for the entire frame in order to inhibit the production switcher from attempting to add another background.

In the second mode of operation (background off), the output key signal $K_3'$ is equal to $K_3$, and the production switcher will then add background to pixels for which $K_3'$ is not 1.0 in proportion to the value of $(1 - K_3)$. The production switcher will multiply $V_3''$ by $K_3'$. Since $K_3'$ is equal to $K_3$, it is desired for the reason indicated above that $V_3''$ not be equal to $V_3'$. Therefore, in the second mode the output signal $V_3'$ from the summer 102 is divided by the key signal $K_3$, so that
$$V_3'' = V_3'/K_3.$$
Therefore, the signal $V_3''$ is equal to $V_3$ (which does not actually exist), and the switcher may multiply the signal $V_3''$ by $K_3'$ (which is equal to $K_3$) and produce the desired signal $V_3'$ at the switcher output. For pixels at which $K_3$ is close to zero, $V_3''$ is indeterminate, but this is not important to the final program video signal because these pixels make no contribution to that signal.

It will be appreciated that the invention is not restricted to the particular apparatus that has been described and illustrated, and that variations may be made therein without departing from the scope of the invention as defined in the appended claims, and equivalents thereof. For example, instead of using interdependent processing circuits for generating, from $K_1$, $K_2$ and $P_{12}$, the multiplication factors for the video signals $V_1$ and $V_2$, these multiplication factors may be generated independently, as mix constants that are separately applied to the multipliers of a signal mixer that is of otherwise conventional form. It is not necessary that each combiner cell of the system shown in FIG. 3 should have its own output processor, since if the output is always to be taken from the same combiner cell, it is necessary only that an output processor be associated with that combiner cell. In a preferred implementation of the invention, the key and video output signals of the last combiner cell in the cascade are connected as inputs to the first combiner cell, so as to establish a closed ring. This provides additional flexibility, in that the ring can be logically broken at any point, allowing additional priority combinations. For example, in the arrangement shown in FIG. 3 the signal $V_4'$ can only be combined with the composite signal $V_1'/V_2'$, and the component signal $V_9'$ can only be combined with the composite signal $V_1'/ \ldots /V_8'$. The scene represented by the signal $V_9'$ cannot be made to appear behind the $V_1$ scene but in front of the $V_4$ scene. However, if the switches 94 are operated so that the output signals $V_9'$ and $K_9$ are applied to the combiner cell 30 in lieu of the input signals $V_2'$ and $K_2$, and $P_{12}$ and $P_{34}$ are set to unity, the desired composite signal would be provided at the output of the output processor 42 ($V_5''$, $K_5'$). The key signal $K_5$ must be forced to zero inside the combiner cell 90.

It will also be appreciated that although the preferred embodiment of the invention, described above with reference to the drawings, is implemented using parallel digital data, it could also be implemented using serial digital data or analog data.

## Claims

1. A processing circuit (32,42,92) for receiving a shaped video signal $V_3'$ and an associated key signal $K_3$ and providing output signals in response thereto, said processing circuit having at least a first mode of operation and comprising first means (102-112) operative in the first mode of the processing circuit to generate from the shaped video signal $V_3'$ and the associated key signal $K_3$ an output video signal $V_3''$ given by
$$V_3'' = V_3' + A$$
where A is a function of the associated key signal and is independent of $V_3'$, and second means (114) operative in the first mode to generate an output key signal having a constant value.

2. A processing circuit according to claim 1, having a second mode of operation, and wherein the first means (102-112) are operative in the second mode to generate an output video signal $V_3''$ given by

$$V_3'' = C\, V_3'/K_3$$

where C is a constant, and the second means (114) are operative in the second mode to generate an output key signal that is directly proportional to the key signal $K_3$.

3. A processing circuit according to claim 1, wherein said processing circuit has an input terminal for receiving a matte signal $M_3$ and is operative in the first mode to generate an output video signal $V_3''$ given by

$$V_3'' = V_3' + M_3(1 - K_3).$$

## Patentansprüche

1. Verarbeitungsschaltung (32, 42, 92) zum Empfang eines geformten Videosignals $V_3'$ und eines zugeordneten Keysignals $K_3$ und zur Erzeugung von Ausgangssignalen als Reaktion darauf, wobei die Verarbeitungsschaltung mindestens einen ersten Betriebsmodus aufweist und erste Einrichtungen (102-112) umfaßt, die in dem ersten Modus der Verarbeitungsschaltung funktionsfähig sind, so daß sie aus dem geformten Videosignal $V_3'$ und dem zugeordneten Keysignal $K_3$ ein Ausgangs-Videosignal $V_3''$ erzeugen, das durch

$$V_3'' = V_3' + A$$

gegeben ist, wobei A eine Funktion des zugeordneten Keysignals und von $V_3'$ unabhängig ist, wobei die Schaltung ferner zweite Einrichtungen (114) umfaßt, die in dem ersten Modus funktionsfähig sind, so daß sie ein Ausgangs-Keysignal mit konstantem Wert erzeugen.

2. Verarbeitungsschaltung nach Anspruch 1, mit einem zweiten Betriebsmodus, und wobei die ersten Einrichtungen (102-112) in dem zweiten Modus funktionsfähig sind, um ein Ausgangs-Videosignal zu erzeugen, das durch

$$V_3'' = C\, V_3'/K_3$$

gegeben ist, wobei C konstant ist, und wobei die zweiten Einrichtungen (114) in dem zweiten Modus funktionsfähig sind, so daß sie ein Ausgangs-Keysignal erzeugen, das direkt proportional zu dem Keysignal $K_3$ ist.

3. Verarbeitungsschaltung nach Anspruch 1, wobei die Verarbeitungsschaltung einen Eingangsanschluß zum Empfang eines Maskensignals $M_3$ aufweist und in dem ersten Modus funktionsfähig ist, um ein Ausgangs-Videosignal $V_3''$ zu erzeugen, das durch

$$V_3'' = V_3' + M_3 (1 - K_3)$$

gegeben ist.

## Revendications

1. Circuit de traitement (32,42,92) pour recevoir un signal vidéo conformé $V_3'$ et un signal de manipulation associé $K_3$ et fournir des signaux de sortie en réponse à cette réception, ledit circuit de traitement ayant au moins un premier mode de fonctionnement et comprenant des premiers moyens (102-112) qui agissent, dans le premier mode du circuit de traitement, pour engendrer, à partir du signal vidéo conformé $V_3'$ et du signal de manipulation associé $K_3$, un signal vidéo de sortie $V_3''$ donné par

$$V_3'' = V_3' + A$$

où A est une fonction du signal de manipulation associé et est indépendant de $V_3'$, et des deuxièmes moyens (114) qui agissent dans le premier mode pour engendrer un signal de manipulation de sortie ayant une valeur constante.

2. Circuit de traitement suivant la revendication 1, ayant un deuxième mode de fonctionnement, et dans lequel les premiers moyens (102-112) agissent dans le deuxième mode pour engendrer un signal vidéo de sortie $V_3''$ donné par

$$V_3'' = C\, V_3'/K_3$$

où C est une constante, et les deuxièmes moyens (114) agissent dans le deuxième mode pour engendrer un signal de manipulation de sortie qui est directement proportionnel au signal de manipulation $K_3$.

3. Circuit de traitement suivant la revendication 1, dans lequel ledit circuit de traitement comporte une borne d'entrée pour recevoir un signal de fond $M_3$ et fonctionne, dans le premier mode, pour engendrer un signal vidéo de sortie $V_3''$ donné par

$$V_3'' = V_3' + M_3(1 - K_3).$$

FIG. 1

FIG. 2

FIG. 3

FIG.4